# EUROPEAN PATENT SPECIFICATION

(11) **EP 3 441 438 B1**
(45) Date of publication and mention of the grant of the patent: **31.01.2024**
(21) Application number: 18188110.3
(22) Date of filing: 08.08.2018
(51) Int. Cl.: C09J 11/06, C08G 59/40, C08G 59/68

(54) **ADHESIVE COMPOSITION**
HAFTZUSAMMENSETZUNG
COMPOSITION ADHÉSIVE

(30) Priority: 09.08.2017 GB 201712781
(43) Date of publication of application: 13.02.2019
(73) Proprietor: Hexcel Composites Limited, Duxford, Cambridgeshire CB22 4QB (GB)
(72) Inventor: CLEAVER, Matthew, Duxford, Cambs CB22 4QB (GB)
(74) Representative: TLIP Limited

(56) References cited:
- WO-A2-2014/071334
- US-A- 5 965 673

## Description

The present invention relates to the use of an adhesive composition for adhering together two or more metal substrates.

Adhesive compositions used in the production of components in the aerospace industry must meet stringent requirements. They can be employed in the manufacture of interior components, for bonding primary and secondary structure parts, and for bonding composite parts or components to non-composite parts or components.

The components used in such industries are often made up of composite materials or metal alloys which must be suitably connected to one another. These composite materials are often formed from so-called prepregs consisting of a fibrous layer impregnated with a curable resin.

Prepregs are particularly useful in the production of laminates of one or more layers of metal sheet or foil interleaved with one or more layers of fibre reinforced epoxy resins (referred to herein as "Fiber reinforced Metal Laminates" (FML) ). These laminates have been widely adopted under the trade name Glare^{®} in the aircraft industry. Any adhesive formulations which bond these laminates must both adhere to the metal foil and cure to provide a fibre reinforced layer of high strength firmly bonded to the metal foil.

Epoxy resin formulations are frequently used in the production of prepregs and function as structural reinforcement resins in such applications. An example of such a structural reinforcement resin can be seen in WO2014/202593.

Epoxy resin based adhesives are widely used for bonding various substrates because of their good bonding strength and versatility. Two-component epoxy resin based adhesive systems in which an epoxy resin in combination with a separate hardener are mixed before use are particularly well-known in the art. However, in such an application the components have to be properly measured and thoroughly mixed before use, after which the admixture of components commences curing. This poses a problem for large volume industrial applications as the relatively short out-life and the need for accurate measurement, and mixing are inefficient.

Previous attempts to reduce the time required for the curing reaction by appropriate selection of the epoxy resin or resins used, the amount and nature of the curative and the amount and nature of the catalyst have had limited success in reducing the time required for the curing reaction and have not resulted in an adhesive composition having the desired mechanical properties.

WO 2011/055141 discloses an adhesive formulation which has the advantage that it is provided as a one-component adhesive curable at an elevated temperature with a low tendency to exotherm. This adhesive does not require admixing of resins and curatives at the point of use. However, this adhesive has the disadvantage that it expands which is not desired for structural bonding applications in FML applications.

Other important properties of the adhesive formulation may include cold storage, shelf life and retention of physical and mechanical properties under humid conditions. Another important property of an adhesive is the lap shear to ensure strong bonding to substrates. Other important properties might include performance at elevated temperatures once cured.

Tackiness may also be required for the adhesive resin formulation as the adhesive permits the bonding of other materials to one another. Tack for adhesives in FML applications is generally assessed using ASTM D 1878-61T.

The adhesive composition may additionally require a shelf life to enable storage prior to use. Typically the adhesive should retain its properties for at least 15 days when stored at about 20°C at a relative humidity of 65%. The cured product should also retain its physical and mechanical characteristics when exposed to humid conditions and also have acceptable damage tolerance and compression strengths under both wet and dry conditions.

US5965673 discloses a solid, one-component, flexible epoxy-based composition comprising (a) an epoxy-terminated prepolymer formed by reacting at least four moles of a polyepoxide resin with approximately one mole of a diamine compound, wherein at least one of the polyepoxide resin and diamine compound is solid at room temperature, and wherein the prepolymer is rheologically stable for weeks as a single component mixture at room temperature and (b) a substantially stoichiometric amount of an epoxy resin curing agent selected from the group consisting of a heat-curable, latent epoxy resin curing agent and a room temperature-curable ketimine curing agent.

WO2014/071334 discloses a thermoset adhesive for bonding two materials having different linear expansion coefficients with reduced warping and without spaces being formed therebetween, the thermoset adhesive comprising an epoxy resin, a core-shell rubber, thermally expansive microparticles, and a curing agent; wherein the thermally expansive microparticles can have at least one or any combination of an average particle size of from 9 to 19 µm, an expansion initiation temperature of from 70 to 100°C, and a maximum expansion temperature of from 110 to 135°C.

The present invention aims to address or alleviate any one of the aforementioned problems and/or to provide improvements generally.

According to the invention there is provided a composition a use as defined in any one of the accompanying claims.

In an embodiment of the invention there is provided the use of an adhesive composition comprising:
(a) at least one epoxy resin; and
(b) a curative system comprising
   a hydrazide curing agent,
   and a urone based accelerator;
   wherein the curative system is present at between 10 to 12 weight%, preferably between 10 to 11 weight% based on the weight of the adhesive composition, for adhering two or more substrates together, wherein the substrates are metal substrates.

In a further embodiment, the hydrazide curing agent is selected from dihydrazide, adipic dihydrazide (ADH), sebacic dihydrazide (SDH), dodecanediohydrazide (DDH), isophtalic dihydrazide (IDH), salicyclic hydrazide (SAH) and/or a combination of the aforesaid hydrazide curing agents.

In another embodiment, the urone based accelerator is selected from 2,4-toluene bis (dimethyl urea), 2, 6 toluene bis (dimethyl urea), or 4, 4'-methylene bis (phenyl dimethyl) urea (MDI urone) and / or combinations of the aforementioned curing accelerators. Other suitable urone based accelerator may include: 4, 4-methylene diphenylene bis (N, N- dimethylurea), 1,1-dimethyl-3- (4-chlorophenyl) urea, isophorone-bis (dimethylurea), 1,1-dimethyl-3- (4-ethoxyphenyl) urea, 1,1- (1,4-phenylene) bis _ (3, 3-dimethylaminopropyl) urea, 1,1-dimethyl-3- (2-hydroxyphenyl) urea, 1,1-dimethyl-3- (3-chloro-4-methylphenyl) urea.

In an embodiment, the curative system consists of only a hydrazide curing agent in combination with a urone based accelerator.

In a preferred embodiment, curative systems which contain a hydrazide curing agent in combination with a urone based accelerator and which further contain additional curing components or curing accelerators are excluded from the scope of this invention.

In a further embodiment, the curative system excludes an imidazole curing agent. The curative system may further exclude a dicyandiamide. We have found that if additional curing agents are included in addition to the preferred combination of a hydrazide curing agent and a urone based accelerator, this reduce outlife, and the mechanical properties of the adhesive following curing.

Preferably, the curative system comprises 2 to 7 weight% adipic dihydrazide and 4 to 7 weight% MDI urone by weight of the composition. More preferably the curative comprises 5 to 6 weight%, preferably 6 weight% of adipic dihydrazide and 4 to 5 weight%, preferably 4 weight% of MDI urone by total weight of composition.

The adhesive composition is advantageously curable at a temperature between 100 to 150°C, preferably from 110 to 140 °C and more preferably from 120 to 130 °C, within 30 to 120 minutes, preferably from 40 to 100 minutes and more preferably from 50 to 60 minutes in an autoclave, closed mould or oven or press.

The invention provides the use of an adhesive composition comprising an epoxy resin system to adhere materials to satisfy the properties required for aircraft components such as fuselages, sleeves for rotor blades in helicopters and internal and external panels. The present invention is also suitable for use on aircraft primary structures.

Surprisingly the adhesive composition for use in the present invention exhibits excellent self-adhesive properties, tack, release from carrier material and handleability. More surprisingly, the present invention exhibits desirable shear and peel properties, even at elevated temperature.

In a further embodiment, the adhesive composition for use in the present invention comprises (a) at least one epoxy resin; and (b) a curative system comprising amine curing agent comprising adipic dihydrazide and a urone based accelerator comprising MDI urone.

The curative system assists the curing of the adhesive composition of the present invention by crosslinking of the epoxy resin and any other ingredients in the composition if present. The composition advantageously comprises 10 weight% of the curative system.

In an embodiment, the adhesive composition may comprise even more advantageously, 2 to 7 weight% adipic dihydrazide and 4 to 7 weight% MDI urone, and more advantageously still, 6 weight% adipic dihydrazide and 4 weight % methylene diphenyl diisocyanate (MDI) urone all based on the total weight of the composition.

Additionally, the adhesive composition for use in the present invention comprises by weight of the composition:
(a) 28 - 35 weight% of solid bisphenol A epoxy resin
(b) 10 - 12 weight% curative system comprising amine curing agent comprising adipic dihydrazide and a urone based accelerator comprising MDI urone
(c) 1 to 5 weight % polyfunctional epoxy resin
(d) 8 - 15 weight % phenoxy bisphenol A resin
(e) 1 to 25 weight % flexibilizer and optionally
(f) 15 to 25 weight% of liquid bisphenol A epoxy resin

We have found that a desirable combination of properties may be further enhanced by employing a rubber epoxy adduct in the formulations of the invention. The rubber epoxy adduct is compatible with the epoxy resins as the formulation cures to provide the required strength and Tg and the thermoplastic component contributes to providing the required elongation.

It is preferred that the adhesive compositions for use in this invention are semi-solid at ambient temperature. This helps the application of the formulation and prevents sagging. By selecting a combination of both solid and liquid formulation components, it is possible to arrive at a formulation having semi-solid properties at room temperature without requiring additional fillers or other flow modifiers.

In an embodiment, the adhesive composition may comprise two or more of the following:
(i) a solid bisphenol A epoxy resin, (ii) a polyfunctional epoxy resin and (iii) a liquid bisphenol A epoxy resin. The composition may comprise 20 to 40 weight% of solid bisphenol A epoxy resin by total weight of composition. The composition may also comprise 1 to 10 weight% of polyfunctional epoxy resin by total weight of the composition. Preferably the polyfunctional epoxy resin is a multifunctional glycidylamine resin.

In a further embodiment of the invention the adhesive composition for use in the invention comprises:
(a)
   (i) a solid bisphenol A epoxy resin
   (ii) a polyfunctional epoxy resin
   (iii) a liquid bisphenol A epoxy resin
(b) a curative system comprising amine curing agent comprising adipic dihydrazide and a urone based accelerator comprising MDI urone
(c) a phenoxy bisphenol A resin
(d) a rubber adduct
(e) a toughener
(f) a mineral filler

In another embodiment, the composition further comprises a core shell rubber.

In a further embodiment the adhesive composition for use in comprises based on the total weight of the composition:
(a) 28 - 35 weight % solid bisphenol A epoxy resin
(b) 10 - 12 weight % curative system comprising amine curing agent comprising adipic dihydrazide and a urone based accelerator comprising MDI urone
(c) 1 to 5 weight % polyfunctional epoxy resin
(d) 8-15 weight % phenoxy bisphenol A resin
(e) 1 to 5 weight % rubber adduct and optionally
(f) 15 to 25 weight% of liquid bisphenol A epoxy resin

In another embodiment, the adhesive composition for use in the present invention comprises by weight of composition:
(a)
   (i) 30 to 35 weight% solid bisphenol A epoxy resin
   (ii) 2 to 10 weight % multifunctional glycidylamine resin
   (iii) 9.8 weight % liquid bisphenol A epoxy resin
(b) 10 weight % curative system comprising by total weight of composition 2 to 6 weight % adipic dihydrazide and 4 to 8 weight % methylene diphenyl diisocyanate (MDI) urone
(c) 5 to 10 weight % phenoxy bisphenol A resin
(d) 5 to 10 weight % rubber adduct
(e) 2 to 9 weight % ethylene vinyl acetate copolymer

### Epoxy resins

The polyfunctional epoxy resin may have a functionality of at least 2, advantageously a functionality of 3 or 4. It advantageously has a high reactivity as indicated by an EEW in the range from 100 to 1500, advantageously from 100 to 350, more advantageously from 100 to 300, most advantageously an EEW in the range of from 100 to 250 and/or combinations of the aforesaid ranges.

Suitable difunctional epoxy resins, by way of example, include those based on diglycidyl ether of bisphenol F, diglycidyl ether of bisphenol A (optionally brominated), phenol and cresol epoxy novolacs, glycidyl ethers of phenol-aldehyde adducts, glycidyl ethers of aliphatic diols, diglycidyl ether, diethylene glycol diglycidyl ether, aromatic epoxy resins, aliphatic polyglycidyl ethers, epoxidised olefins, brominated resins, aromatic glycidyl amines, heterocyclic glycidyl imidines and amides, glycidyl ethers, fluorinated epoxy resins, glycidyl esters or any combination thereof.

Suitable trifunctional epoxy resins, by way of example, may include those based upon phenol and cresol epoxy novolacs, glycidyl ethers of phenol-aldehyde adducts, aromatic epoxy resins, aliphatic triglycidyl ethers, dialiphatic triglycidyl ethers, aliphatic polyglycidyl amines, heterocyclic glycidyl imidines and amides, glycidyl ethers, fluorinated epoxy resins, or any combination thereof. Suitable trifunctional epoxy resins are available from Huntsman Advanced Materials (Monthey, Switzerland) under the tradenames MY0500 and MY0510 (triglycidyl para-aminophenol) and MY0600 and MY0610 (triglycidyl meta-aminophenol). Triglycidyl meta-aminophenol is also available from Sumitomo Chemical Co. (Osaka, Japan) under the tradename ELM-120.

Tetrafunctional resins are preferred resins for use as the multifunctional resin for the formulation for use in this invention and suitable tetrafunctional epoxy resins include N,N, N',N'- tetraglycidyl-m-xylenediamine (available commercially from Mitsubishi Gas Chemical Company under the name Tetrad-X, and as Erisys GA-240 from CVC Chemicals), and N,N,N',N'-tetraglycidylmethylenedianiline (e.g. MY0720 and MY0721 from Huntsman Advanced Materials). Other suitable multifunctional epoxy resins include DEN438 (from Dow Chemicals, Midland, MI) DEN439 (from Dow Chemicals), Araldite ECN 1273 (from Huntsman Advanced Materials), Araldite ECN 1299 and Araldite MY9512 (from Huntsman Advanced Materials).

The composition of this invention may also include other epoxy resins such as novolac resins, phenolic end capped bisphenol A resin. Suitable resins, by way of example, include those based on: diglycidyl ether of bisphenol F, diglycidyl ether of bisphenol A (optionally brominated), phenol and cresol epoxy novolacs, glycidyl ethers of phenol-aldelyde adducts, glycidyl ethers of aliphatic diols, diglycidyl ether, diethylene glycol diglycidyl ether, aromatic epoxy resins, aliphatic polyglycidyl ethers, epoxidised olefins, brominated resins, aromatic glycidyl amines, heterocyclic glycidyl imidines and amides, glycidyl ethers, fluorinated epoxy resins, glycidyl esters or any combination thereof. An example of a suitable resin is Araldite EP820.

The composition may contain other additives such as flexibilizers, impact modifiers, polymers or copolymers fillers and other elongation promoting additives as discussed in the following sections.

### Phenoxy Resin

Phenoxy resins are used in the formulations for use in the present invention as modifiers, and as tougheners. A phenoxy resin is a polyhydroxyether, with ether linkages along the polymer backbone and pendant hydroxyl groups. One useful phenoxy resin is the reaction product of a phenol based difunctional epoxy resin and a difunctional phenol (for example the reaction product of bisphenol A epoxy with bisphenol A). A similar material may also be synthesized directly from a bisphenol (for example bisphenol A) and epichlorohydrin. The terminal epoxy group may be ring opened to generate a terminal alpha glycol group. The phenoxy resins typically have weight-average molecular weights of at least about 5,000, more typically at least about 25,000 and still more typically at least about 50,000 but less than about 100,000, more typically less than about 75,000 and still more typically less than about 60,000. Examples of useful phenoxy resins include PAPHEN Phenoxy Resin PKHH and PKHJ from Inchem Corp. and Phenoxy resins available from Kukdo such as Phenoxy YP50.

The composition advantageously comprises between 3 to 20 weight% of a phenoxy resin by weight of the composition and even more advantageously between 4 and 10 weight% more advantageously between 5 and 10 weight% based on the total weight of the composition.

### Accelerator

In the adhesive composition for use in the invention, urea-based accelerators are preferable such as 2,4-toluene bis (dimethyl urea) or 2, 6 toluene bis (dimethyl urea), or 4, 4'-methylene bis (phenyl dimethyl) urea (MDI urone), and / or combinations of the aforementioned curing accelerators. Urea-based accelerators may also be referred to as "urones" or urone based accelerators. Other suitable urone based accelerators may include: 4, 4-methylene diphenylene bis (N, N- dimethylurea), 1,1-dimethyl-3- (4-chlorophenyl) urea, isophorone-bis (dimethylurea), 1,1-dimethyl-3- (4-ethoxyphenyl) urea, 1,1- (1,4-phenylene) bis- (3, 3-dimethylaminopropyl) urea, 1,1-dimethyl-3- (2-hydroxyphenyl) urea, 1,1-dimethyl-3- (3-chloro-4-methylphenyl) urea.

Preferred urea based materials are the range of materials available under the commercial name DYHARD^{®} the trademark of Alzchem, urea derivatives, which include bis ureas such as UR505, UR500 and Omnicure U52M. The composition may contain other additives such as flexibilizers, impact modifiers, polymers or copolymers, fillers and other elongation promoting additives.

The urone based accelerator preferably comprises 4,4'-Methylene bis (phenyl dimethyl urea). The accelerator may also comprise an imidazole, a trifluoride based accelerator or a Lewis acid or Lewis base.

### Curative

Adipic dihydrazide in combination a urone in the curative system has been found to result in an adhesive with desirable characteristics.

### Toughener

The adhesive composition for use in the invention may comprise a toughener to toughen the composition. The toughener is advantageously premixed with an epoxy resin. The toughener may also be adducted to the epoxy resin. Suitable tougheners may be selected from polyamides, polyurethanes, acrylates, polyethersulphones, core shell rubbers and other elastomer components.

The toughener is preferably in the form of a core shell elastomer. The core shell elastomer used in the compostion of this invention is advantageously a blend of a core shell elastomer particle in an epoxy resin. These materials generally include about 1:5 to 5:1 parts of epoxy to elastomer, and more advantageously about 1:3 to 3:1 parts of epoxy to elastomer.

More typically, the core shell elastomer includes at least about 5%, more typically at least about 12% and even more typically at least about 18% elastomer and also typically includes not greater than about 50%, even more typically no greater than about 40% and still more typically no greater than about 35% elastomer, although higher or lower percentages are possible. Advantageously the weight percentage of the core shell particle alone is present in an amount from 5 to 40%, or more advantageously from 10 to 30% or more advantageously still from 15 to 20%, and/or combinations of the aforesaid ranges.

Advantageously, the core shell elastomer is a core shell rubber.

Core shell elastomers are frequently sold in admixture with an epoxy resin and these products are useful in the present invention.

### Rubber/Epoxy Adduct

The rubber epoxy adduct is advantageously an epoxy/elastomer adduct. These materials generally includes about 1 : 5 to 5 : 1 parts of epoxy to elastomer, and more advantageously about 1 : 3 to 3 : 1 parts of epoxy to elastomer. More typically, the adduct includes at least about 5%, more typically at least about 12% and even more typically at least about 18% elastomer and also typically includes not greater than about 50%, even more typically no greater than about 40% and still more typically no greater than about 35% elastomer, although higher or lower percentages are possible. The elastomer suitable for the adduct may be functionalized at either the main chain or the side chain. Suitable functional groups include, but are not limited to, -COOH, -NH , -NH-, -OH, -SH, -CONH2, - CONH-, -NHCONH-, -NCO, -NCS, and oxirane or glycidyl group etc. The elastomer optionally may be vulcanizeable or post-crosslinkable. Exemplary elastomers include, without limitation, natural rubber, styrene-butadiene rubber, polyisoprene, polyisobutylene, polybutadiene, isoprenebutadiene copolymer, neoprene, nitrile rubber, butadiene-acrylomitrile copolymer, butyl rubber, polysulfide elastomer, acrylic elastomer, acrylonitrile elastomers, silicone rubber, polysiloxanes, polyester rubber, disocyanatelinked condensation elastomer, EPDM (ethylene-propylene diene rubbers), chlorosulfonated polyethylene, fluorinated hydrocarbons, thermoplastic elastomers such as (AB) and (ABA) type of block copolymers of styrene and butadiene or isoprene, and (AB)n type of multi-segment block copolymers of polyurethane or polyester, and the like. In the case that carboxyl-terminated butadiene- acrylonitrile (CTBN) is used as the functionalized elastomer, the preferable nitrile content is from 12-35% by weight, more advantageously from 20-33% by weight.

An example of a epoxide-functionalized epoxy/elastomer adduct is sold in admixture with an epoxy resin under the trade name HyPox^{™} RK84 (Figure 5), a bisphenol A epoxy resin modified with CTBN elastomer, and under the trade name HyPox^{™} RA1340, an epoxy phenol novolac resin modified with CTBN elastomer, both commercially available from CVC Thermoset Specialities, Moorestown, NJ.

Advantageously, the present invention comprises core shell elastomer and polyurethane adduct.

### Flexibilizer

Flexibilizers improve the adhesive properties of the adhesive composition and they may be selected to improve the adhesive properties in relation to the substrate to which the adhesive is applied. Flexibilizers may be selected from phenol functionalized resins such as phenol terminated polyether adducts and phenol terminated polyurethane adducts, multifunctional propylene glycol based epoxy resins such as difunctional or trifunctional propylene glycol based epoxy resins, polyamines such as polyether polyamine and polyether urethane amine, acetates such as vinyl acetate copolymers and polyols such as polyurethane polyol resin.

### Other additives

The compositions for use in this invention may contain other additives used in epoxy formulation such as antioxidants, colorants and processing aids.

The compositions for the use in the present invention have adequate tack or adhesiveness to allow a substrate to which the adhesive is applied to adhere to other materials, including other substrates. Substrates include composite structures, such as GLARE panels, metallic structures and the like. The tack of the adhesive composition holds the substrates in place, and facilitates positioning and repositioning which may be conducted using automated equipment.

Composite laminates and/or metals may be adhered using the composition of the present invention, and are suitable for use in a structural application, such as for example such as an interior or external panels, a sleeve for helicopter rotor blades, or an aerospace structure, and may be used in the production of aircraft components particularly the fuselage of aircraft.

The invention will now be further illustrated by way of example only. The invention is illustrated but in no way limited by the following examples in which the following compositions were prepared employing the following ingredients:
- Araldite ^{®} MY9512 - a multifunctional epoxy resin from Huntsman.
- YP50 - a phenoxy resin from Kukdo.
- CSR in Bis-A, Core Shell Rubber in Bisphenol-A Resin, MX-153 Kaneka
- ADH - adipic Dihydrazide curative from ACCI Specialty Materials
- MDI urone from Alzchem.
- Filler, inert, average particle size 0.4 microns.
- DER332 - a Bisphenol A epoxy resin of EEW 174 from Olin.
- Araldite ^{®} GT6071N - solid bisphenol A resin solid of EEW457 from Huntsman.
- Polyurethane polyol, DY965 Ribelin
- Elvax 40W - vinyl acetate copolymer flexibilizer available from E.I. du Pont de Nemours and Company.

### Example 1

The following Compositions 1 to 4, which are in accordance with the present invention, were prepared by first melting the components GT6071N, YP50 in the quantities as set out in the below Table 1. Subsequently, the relevant amounts of the other liquid components were added to the Compositions in the quantities as shown in Table 1
The Compositions 1 to 4 showed desirable characteristics for an adhesive composition, with Composition 3 showing the most desirable characteristics.

| ***Table 1*** | **Composition 1 (wt%)** | **Composition 2 (wt%)** | **Composition 3 (wt%)** | **Composition 4 (wt%)** |
|---|---|---|---|---|
| **Component** | | | | |
| DER 332 | 10 | 10 | 10 | 13 |
| MX153 | 17 | 17 | 17 | 17 |
| GT 6071 | 35 | 35 | 35 | 28 |
| MY9512 | 5 | 5 | 5 | 8 |
| MDI urone | 7 | 5 | 4 | 4 |
| ADH | 3 | 5 | 6 | 7 |
| PU polyol | 5 | 5 | 5 | 5 |
| Inert filler | 3 | 3 | 3 | 3 |
| Phenoxy YP-50P | 15 | 10 | 8 | 8 |
| 40W | 0 | 5 | 7 | 7 |
| | | | | |

| **Results** | | | | |
|---|---|---|---|---|
| Lap shear | | | | |
| 20°C (Mpa) | 33.4 | 33.6 | 31.64 | 30.54 |
| 90°C (Mpa) | 29.62 | 27.5 | 22.14 | 25.25 |
| | | | | |
| Bell peel | | | | |
| RT (N/25 mm) | 147 | 133.9 | 121.5 | 78.9 |
| 90°C (N/25 mm) | 118 | 144 | 196 | 108 |
| | | | | |
| Repositionable? | Tacks to itself then peels off | Tacks to itself then peels off | Fully repositionable | Just about repositionable |
| Release from paper | good release | good release | good release | release is okay |
| General comments | stretchy/elasti c | A little elastic | very good handleability | High flow |
| Weight (g/m²) | 295 | 286 | 295 | 303 |

### Example 2

Aluminum 2024 substrates were prepared and primed with Cytec ^{®} BR127. The adhesive, composition 3 from Table 1, was applied at varying bondlines as set out in Table 2 and the substrates bonded to one another.

The adhesive was cured at 125 °C for 1 hour. Subsequently, the adhesive mechanical properties of Composition 3 were assessed. Shear and bell peel were determined at -55°C, 20°C (room temperature, RT), 90°C, Lap shear at RT 2000h 70°C/95% Relative humidity and Lap shear at 90°C 2000h 70°C/95% Relative humidity using EN 2243-1 standard for lap shear and EN2243-2 standard for bell peel.

The results are shown in Table 2 below.

**Table 2**

| **Property** | | | |
|---|---|---|---|
| | **Bonding pressure (kPa)** | | |
| | **350** | **1000** | **350** |
| Lap shear -55°C (MPa) | **21** | - | - |
| Lap shear RT (MPa) | **32** | **31** | **29** |
| Lap shear **90**°C (MPa) | **22** | **25** | **24** |
| LS RT 2000h 70°C/95% RH | **27** | **-** | **-** |
| LS **90**°C 2000h 70°C/95% RH | **13** | - | - |
| Bondline thickness (microns) | **170** | **120** | **80** |
| Bell peel -55°C (N/25mm) | **189** | **-** | **-** |
| Bell peel RT (N/25mm) | **179** | **185** | **180** |
| Bell peel **90**°C (N/25mm) | **196** | - | - |
| Bondline thickness(microns) | **200** | **100** | **70** |
| Substrate: CAA/BR127 | | | |

Bondline thickness is one of the important factors to be considered in designing a bond joint. Most commonly used bond line thicknesses in a bond joint range from about 70 to 200 microns. The performance of an adhesive depends on the properties of the adhesive, the substrates being bonded, surface preparation on the substrates, the bond line thickness and the uniformity of the bond line. Generally, a thin bond line is preferred over a thick one, since the stress concentration at the corners of the joint is lesser in a thinner bond line. Also, the air cavity concentration is lesser in a thin bond line as compared to a thick one.

There is thus provided a use of an adhesive as herein described. We have found that an adhesive composition comprising at least one multifunctional epoxy resin in combination with a curative system comprising a hydrazide curing agent in combination with a urone based accelerator has desirable adhesive properties before curing whilst also having desirable mechanical properties after curing at curing temperatures in the range of from 100°C to 140°C for 1 hour.

## Claims

1. The use of an adhesive composition comprising:
(a) at least one epoxy resin; and
(b) a curative system comprising
a hydrazide curing agent,
and a urone based accelerator.
wherein the curative system is present at between 10 to 12 weight%, preferably between 10 to 11 weight% based on the weight of the adhesive composition, for adhering two or more substrates together, wherein the substrates are metal substrates.

2. The use according to claim 1, wherein the curative system comprises a hydrazide curing agent in the range of from 4 to 8 weight%, advantageously from 5 to 7 weight%, more advantageously from 5 to 6 weight%, and even more advantageously 6 weight% by total weight of composition.

3. The use according to any of the preceding claims, wherein the hydrazide curing agent is selected from dihydrazide, adipic dihydrazide (ADH), sebacic dihydrazide (SDH), dodecanediohydrazide (DDH), isophtalic dihydrazide (IDH), salicyclic hydrazide (SAH) and/or a combination of the aforesaid hydrazide curing agents.

4. The use according to any of the preceding claims, wherein the urone based accelerator is selected from 2,4-toluene bis (dimethyl urea), 2, 6 toluene bis (dimethyl urea), or 4, 4'-methylene bis (phenyl dimethyl) urea (MDI urone) and / or combinations of the aforementioned curing accelerators.

5. The use according to Claim 4, wherein the curative system comprises by total weight of composition 2% to 7% adipic dihydrazide and 4 to 7% MDI urone, preferably the curative system comprises by total weight of composition 6 weight% adipic dihydrazide and 4 weight% MDI urone.

6. The use according to any of the preceding claims, wherein (a) comprises at least multi-functional epoxy resin, in either solid or liquid form.

7. The use according to any of the previous Claims, wherein the composition further comprises core shell rubber.

8. The use according to any of the preceding Claims, wherein the composition further comprises a flexibiliser which may be selected from one or more of nitrile rubbers such as carboxyl terminated butadiene acrylonitrile rubber (CTBN), or phenol terminated adduct such as phenol terminated polyether adduct or phenol terminated polyurethane adduct or a vinyl acetate copolymer or a polyurethane polyol.

9. The use according to any of the previous claims, wherein the composition further comprises a phenoxy based resin, preferably the composition comprises 1 to 20 weight% of phenoxy resin by total weight of composition, more preferably from 5 to 15 weight% of phenoxy resin, even more preferably from 8 to 12 weight% phenoxy resin by total weight of the composition and/or combinations of the aforesaid ranges.

10. The use according to any of the preceding claims, wherein the composition comprises by total weight of composition from 1 to 15 wt% of a flexibiliser, preferably from 10 to 13 wt% of flexiblizer, preferably from 11 to 12 weight% of a flexibilizer based on the total weight of the composition.

11. The use according to claim 10, wherein the composition comprises two flexibilizers in the form of a polyurethane polyol and a vinyl acetate copolymer, and preferably the quantity of the vinyl acetate copolymer exceeds the quantity of the polyurethane polyol, the quantity of the vinyl acetate copolymer exceeding 5 weight% based on the total weight of the composition.

12. The use according to any of the preceding claims wherein the curative system consists of a hydrazide curing agent, and a urone based accelerator and wherein other curing agents and accelerators are absent.

## Patentansprüche

1. Die Verwendung einer Klebstoffzusammensetzung, die Folgendes beinhaltet:
(a) mindestens ein Epoxidharz; und
(b) ein Vernetzungssystem, das Folgendes beinhaltet:
ein Hydrazidhärtungsmittel
und einen Beschleuniger auf Uronbasis,
wobei das Vernetzungssystem zu zwischen 10 und 12 Gewichts-%, bevorzugt zwischen 10 und 11 Gewichts-%, bezogen auf das Gewicht der Klebstoffzusammensetzung, vorhanden ist, um zwei oder mehr Substrate zusammenzukleben, wobei die Substrate Metallsubstrate sind.

2. Verwendung gemäß Anspruch 1, wobei das Vernetzungssystem ein Hydrazidhärtungsmittel in dem Bereich von 4 bis 8 Gewichts-%, vorteilhaft von 5 bis 7 Gewichts-%, vorteilhafter von 5 bis 6 Gewichts-% und noch vorteilhafter 6 Gewichts-%, nach Gesamtgewicht der Zusammensetzung, beinhaltet.

3. Verwendung gemäß einem der vorhergehenden Ansprüche, wobei das Hydrazidhärtungsmittel aus Dihydrazid, Adipinsäuredihydrazid (ADH), Sebacinsäuredihydrazid (SDH), Dodecandiohydrazid (DDH), Isophthalsäuredihydrazid (IDH), Salicylsäurehydrazid (SAH) und/oder einer Kombination der vorgenannten Hydrazidhärtungsmittel ausgewählt ist.

4. Verwendung gemäß einem der vorhergehenden Ansprüche, wobei der Beschleuniger auf Uronbasis aus 2,4-Toluolbis(dimethylharnstoff), 2,6-Toluolbis(dimethylhamstoff) oder 4,4'-Methylenbis(phenyldimethyl)harnstoff (MDI-Uron) und/oder Kombinationen der vorgenannten Härtungsbeschleuniger ausgewählt ist.

5. Verwendung gemäß Anspruch 4, wobei das Vernetzungssystem nach Gesamtgewicht der Zusammensetzung zu 2 % bis 7 % Adipinsäuredihydrazid und zu 4 bis 7 % MDI-Uron beinhaltet, wobei das Vernetzungssystem bevorzugt nach Gesamtgewicht der Zusammensetzung zu 6 Gewichts-% Adipinsäuredihydrazid und zu 4 Gewichts-% MID-Uron beinhaltet.

6. Verwendung gemäß einem der vorhergehenden Ansprüche, wobei (a) mindestens multifunktionelles Epoxidharz in entweder fester oder flüssiger Form beinhaltet.

7. Verwendung gemäß einem der vorherigen Ansprüche, wobei die Zusammensetzung ferner Kern-Schalen-Kautschuk beinhaltet.

8. Verwendung gemäß einem der vorhergehenden Ansprüche, wobei die Zusammensetzung ferner einen Weichmacher beinhaltet, der aus einem oder mehreren von Nitrilkautschuken, wie etwa carboxylterminiertem Butadien-Acrylnitril-Kautschuk (CTBN), oder phenolterminiertem Addukt, wie etwa phenolterminiertem Polyetheraddukt oder phenolterminiertem Polyurethanaddukt, oder einem Vinylacetatcopolymer oder einem Polyurethanpolyol ausgewählt sein kann.

9. Verwendung gemäß einem der vorherigen Ansprüche, wobei die Zusammensetzung ferner ein Harz auf Phenoxybasis beinhaltet, die Zusammensetzung bevorzugt zu 1 bis 20 Gewichts-%, nach Gesamtgewicht der Zusammensetzung, Phenoxyharz, bevorzugter zu 5 bis 15 Gewichts-% Phenoxyharz, noch bevorzugter zu 8 bis 12 Gewichts-%, nach Gesamtgewicht der Zusammensetzung, Phenoxyharz und/oder Kombinationen der vorgenannten Bereiche beinhaltet.

10. Verwendung gemäß einem der vorhergehenden Ansprüche, wobei die Zusammensetzung nach Gesamtgewicht der Zusammensetzung zu 1 bis 15 Gewichts-% einen Weichmacher, bevorzugt zu 10 bis 13 Gewichts-% Weichmacher, bevorzugt zu 11 bis 12 Gewichts-%, bezogen auf das Gesamtgewicht der Zusammensetzung, einen Weichmacher beinhaltet.

11. Verwendung gemäß Anspruch 10, wobei die Zusammensetzung zwei Weichmacher in der Form eines Polyurethanpolyols und eines Vinylacetatcopolymers beinhaltet und die Menge des Vinylacetatcopolymers bevorzugt die Menge des Polyurethanpolyols übertrifft, wobei die Menge des Vinylacetatcopolymers 5 Gewichts-%, bezogen auf das Gesamtgewicht der Zusammensetzung, übertrifft.

12. Verwendung gemäß einem der vorhergehenden Ansprüche, wobei das Vernetzungssystem aus einem Hydrazidhärtungsmittel und einem Beschleuniger auf Uronbasis besteht und wobei keine anderen Härtungsmittel und Beschleuniger vorhanden sind.

## Revendications

1. L'utilisation d'une composition adhésive comprenant :
(a) au moins une résine époxy ; et
(b) un système durcissant comprenant
un agent de durcissement hydrazide,
et un accélérateur à base d'urone,
dans laquelle le système durcissant est présent à hauteur d'entre 10 à 12 % en poids, préférablement d'entre 10 à 11 % en poids rapporté au poids de la composition adhésive, pour faire adhérer deux substrats ou plus ensemble, les substrats étant des substrats métalliques.

2. L'utilisation selon la revendication 1, dans laquelle le système durcissant comprend un agent de durcissement hydrazide dans la plage allant de 4 à 8 % en poids, avantageusement allant de 5 à 7 % en poids, plus avantageusement allant de 5 à 6 % en poids, et encore plus avantageusement de 6 % en poids, en poids total de la composition.

3. L'utilisation selon n'importe lesquelles des revendications précédentes, dans laquelle l'agent de durcissement hydrazide est sélectionné parmi le dihydrazide, le dihydrazide adipique (ADH), le dihydrazide sébacique (SDH), le dodécanediohydrazide (DDH), le dihydrazide isophtalique (IDH), l'hydrazide salicylique (SAH) et/ou une combinaison des agents de durcissement hydrazide susmentionnés.

4. L'utilisation selon n'importe lesquelles des revendications précédentes, dans laquelle l'accélérateur à base d'urone est sélectionné parmi le 2,4-toluène bis(diméthylurée), le 2,6-toluène bis(diméthylurée), ou le 4,4'-méthylène bis(phényldiméthyl)urée (urone MDI) et/ou des combinaisons des accélérateurs de durcissement susmentionnés.

5. L'utilisation selon la revendication 4, dans laquelle le système durcissant comprend en poids total de la composition de 2 % à 7 % de dihydrazide adipique et de 4 à 7 % d'urone MDI, préférablement le système durcissant comprend en poids total de la composition 6 % en poids de dihydrazide adipique et 4 % en poids d'urone MDI.

6. L'utilisation selon n'importe lesquelles des revendications précédentes, dans laquelle (a) comprend au moins de la résine époxy multifonctionnelle, sous forme soit solide, soit liquide.

7. L'utilisation selon n'importe lesquelles des revendications antérieures, dans laquelle la composition comprend en outre du caoutchouc noyau-enveloppe.

8. L'utilisation selon n'importe lesquelles des revendications précédentes, dans laquelle la composition comprend en outre un agent de flexibilité qui peut être sélectionné parmi un ou plusieurs caoutchoucs parmi des caoutchoucs nitrile tels que le caoutchouc d'acrylonitrile butadiène à terminaison carboxyle (CTBN), ou un produit d'addition à terminaison phénol tel qu'un produit d'addition polyéther à terminaison phénol ou un produit d'addition polyuréthane à terminaison phénol ou un copolymère d'acétate de vinyle ou un polyol de polyuréthane.

9. L'utilisation selon n'importe lesquelles des revendications antérieures, dans laquelle la composition comprend en outre une résine à base de phénoxy, préférablement la composition comprend de 1 à 20 % en poids de résine phénoxy en poids total de la composition, plus préférablement de 5 à 15 % en poids de résine phénoxy, encore plus préférablement de 8 à 12 % en poids de résine phénoxy en poids total de la composition et/ou des combinaisons des plages susmentionnées.

10. L'utilisation selon n'importe lesquelles des revendications précédentes, dans laquelle la composition comprend en poids total de la composition de 1 à 15 % en poids d'un agent de flexibilité, préférablement de 10 à 13 % en poids d'agent de flexibilité, préférablement de 11 à 12 % en poids d'un agent de flexibilité rapporté au poids total de la composition.

11. L'utilisation selon la revendication 10, dans laquelle la composition comprend deux agents de flexibilité sous la forme d'un polyol de polyuréthane et d'un copolymère d'acétate de vinyle, et préférablement la quantité du copolymère d'acétate de vinyle dépasse la quantité du polyol de polyuréthane, la quantité du copolymère d'acétate de vinyle dépassant 5 % en poids rapporté au poids total de la composition.

12. L'utilisation selon n'importe lesquelles des revendications précédentes dans laquelle le système durcissant est constitué d'un agent de durcissement hydrazide, et d'un accélérateur à base d'urone et dans laquelle d'autres agents de durcissement et accélérateurs sont absents.
